# EUROPÄISCHE PATENTANMELDUNG

(11) **EP 3 165 420 A1**
(43) Veröffentlichungstag der Anmeldung: **10.05.2017**
(21) Anmeldenummer: 16190809.0
(22) Anmeldetag: 27.09.2016
(51) Int. Cl.: B60W 30/06, G01S 15/93

(54) **VERFAHREN ZUM BESTIMMEN EINES DURCH EINEN MIT EINEM KRAFTFAHRZEUG VERBUNDENEN ANHÄNGER EINGENOMMENEN BEREICHES, FAHRERASSISTENZSYSTEM SOWIE KRAFTFAHRZEUG**

(30) Priorität: 21.10.2015 DE 102015117904
(71) Anmelder: Valeo Schalter und Sensoren GmbH, 74321 Bietigheim-Bissingen (DE)
(72) Erfinder: Thunert, Fabian, 74321 Bietigheim-Bissingen (DE); Maraslis, Christos, 74321 Bietigheim-Bissingen (DE)

(57) **Zusammenfassung**

Die Erfindung betrifft ein Verfahren zum Bestimmen eines durch einen mit einem Kraftfahrzeug (1) verbundenen Anhänger (A) eingenommenen Bereiches (10) in einem Umgebungsbereich (8) des Kraftfahrzeugs (1) für eine den Umgebungsbereich (8) abbildende Umfeldkarte (U), mit den Schritten:
- Empfangen von durch eine fahrzeugseitige Erfassungseinrichtung (4) erfassten Positionsdatenpunkten (P1, P2, P3, P4, P5, P6), welche den Umgebungsbereich (8) des Kraftfahrzeugs (1) beschreiben;
- Auswählen von anhängerspezifischen Positionsdatenpunkten (P2, P3, P4, P5, P6), welche dem Anhänger (A) zugeordnet werden, aus den empfangenen Positionsdatenpunkten (P1, P2, P3, P4, P5, P6);
- Bestimmen einer Kontur (K) des Anhängers (A) aus den anhängerspezifischen Positionsdatenpunkten (P2, P3, P4, P5, P6) als eine, eine Fläche (F) einschließende Hüllkurve (H) derart, dass die anhängerspezifischen Positionsdatenpunkte (P2, P3, P4, P5, P6) auf der Hüllkurve (H) und/oder innerhalb der durch die Hüllkurve (H) eingeschlossenen Fläche (F) liegen;
- Bestimmen der durch die Hüllkurve (H) eingeschlossenen Fläche (F) als den von dem Anhänger (A) eingenommenen Bereich (10).

## Beschreibung

Die Erfindung betrifft ein Verfahren zum Bestimmen eines durch einen mit einem Kraftfahrzeug verbundenen Anhänger eingenommenen Bereiches in einem Umgebungsbereich des Kraftfahrzeugs für eine den Umgebungsbereich abbildende Umfeldkarte. Die Erfindung betrifft außerdem ein Fahrerassistenzsystem sowie ein Kraftfahrzeug.

Es ist bereits aus dem Stand der Technik bekannt, einen Umgebungsbereich eines Kraftfahrzeugs mit einer Vielzahl von Erfassungseinrichtungen beziehungsweise Sensoren zu überwachen. Solche Sensoren können beispielsweise Ultraschallsensoren, Kameras, Radarsensoren oder laserbasierte Sensoren sein. Mittels dieser Sensoren können Objekte sowie deren Positionen in dem Umgebungsbereich des Kraftfahrzeugs erkannt werden und in eine den Umgebungsbereich abbildende Umfeldkarte eingetragen werden. Anhand dieser Umfeldkarte kann ein Fahrerassistenzsystem des Kraftfahrzeugs verschiedene Funktionen bereitstellen beziehungsweise verschiedene Aktionen ausführen. So kann das Fahrerassistenzsystem beispielsweise eine Notbremsung oder ein Weglenken bei einem Kollisionskurs auf ein als Hindernis identifiziertes Objekt durchführen. Auch kann das Fahrerassistenzsystem, insbesondere bei einer Rückwärtsfahrt des Kraftfahrzeugs, einen Fahrer des Kraftfahrzeugs optisch, akustisch oder haptisch vor einer drohenden Kollision mit einem Hindernis warnen. Das Fahrerassistenzsystem kann auch als ein Parkassistenzsystem ausgestaltet sein, welches basierend auf den Informationen über die erfassten Objekte Parklücken zwischen den erfassten Objekten detektieren kann und beispielsweise eine kollisionsfreie Parktrajektorie zum Einparken des Kraftfahrzeugs planen kann.

Probleme bei der Umgebungserfassung mittels der Sensoren ergeben sich insbesondere dann, wenn ein Anbauteil, beispielsweise ein Anhänger, an das Kraftfahrzeug angekoppelt ist. Ein Hinderniserkennungssystem, mittels welchem ein Anbauteil an einem Kraftfahrzeug erkannt werden kann, ist aus der DE 198 05 515 A1 bekannt. In der US 7 301 497 B2 ist ein Parkassistenzsystem mit einer Anhängererkennung offenbart. Falls von dem Kraftfahrzeug erkannt wird, dass ein Anhänger an das Kraftfahrzeug angekoppelt ist, sind viele der Funktionen des Fahrerassistenzsystems, beispielsweise bei der Rückwärtsfahrt des Kraftfahrzeugs, in der Regel nur eingeschränkt verfügbar. Beispielsweise würden die den rückwärtigen Umgebungsbereich überwachenden Sensoren in diesem Fall den Anhänger detektieren und fälschlicherweise als ein Hindernis identifizieren. Das Fahrerassistenzsystem würde dann basierend auf den Informationen der Sensoren fälschlicherweise auf den Anhänger als ein Hindernis warnen. Aus diesem Grund sind in einem angekoppelten Zustand eines Anhängers am Kraftfahrzeug diese Sensoren zumeist deaktiviert. Daraus ergibt sich jedoch der Nachteil, dass im deaktivierten Zustand der Sensoren keine Umfeldkarte erstellt werden kann und damit das Fahrerassistenzsystem funktionsuntüchtig sein kann. In der DE 10 2011 101 013 A1 ist ein Verfahren zum Ausblenden eines irrelevanten Objektes, beispielsweise einer Anhängerkupplung, beim Detektieren eines Hindernisses beschrieben.

Es ist Aufgabe der vorliegenden Erfindung, eine Lösung bereitzustellen, wie eine Umfeldkarte für ein Fahrerassistenzsystem eines Kraftfahrzeugs besonders zuverlässig und genau bestimmt werden kann.

Diese Aufgabe wird erfindungsgemäß durch ein Verfahren, ein Fahrerassistenzsystem sowie ein Kraftfahrzeug mit den Merkmalen gemäß den unabhängigen Patentansprüchen gelöst.

Ein erfindungsgemäßes Verfahren dient zum Bestimmen eines durch einen mit einem Kraftfahrzeug verbundenen Anhänger eingenommenen Bereiches in einem Umgebungsbereich des Kraftfahrzeugs für eine den Umgebungsbereich abbildende Umfeldkarte. Bei dem Verfahren werden durch eine fahrzeugseitige Erfassungseinrichtung erfasste Positionsdatenpunkte empfangen, welche den Umgebungsbereich des Kraftfahrzeugs beschreiben, und aus den empfangenen Positionsdatenpunkten anhängerspezifische Positionsdatenpunkte ausgewählt, welche dem Anhänger zugeordnet werden. Außerdem wird eine Kontur des Anhängers aus den anhängerspezifischen Positionsdatenpunkten als eine, eine Fläche einschließende Hüllkurve derart bestimmt, dass die anhängerspezifischen Positionsdatenpunkte auf der Hüllkurve und/oder innerhalb der durch die Hüllkurve eingeschlossenen Fläche liegen. Die durch die Hüllkurve eingeschlossene Fläche wird als der von dem Anhänger eingenommene Bereich bestimmt.

Mittels des Verfahrens wird also, beispielsweise mittels einer Steuereinrichtung eines Fahrerassistenzsystems des Kraftfahrzeugs, der von dem Anhänger eingenommene Bereich bestimmt. Der von dem Anhänger eingenommene Bereich, welcher für das Fahrerassistenzsystem in die Umfeldkarte eingetragen werden kann, repräsentiert einen realen Bereich in dem Umgebungsbereich des Kraftfahrzeugs, welcher durch den Anhänger ausgefüllt beziehungsweise blockiert ist. Der von dem Anhänger eingenommene Bereich in der Umfeldkarte ist dabei insbesondere ein virtueller Bereich, mittels welchem beschrieben werden kann, welchen Bereich der Anhänger tatsächlich in dem Umgebungsbereich einnimmt.

Zum Bestimmen des eingenommenen Bereiches werden zunächst die den Umgebungsbereich des Kraftfahrzeugs beschreibenden Positionsdatenpunkte mittels der fahrzeugseitigen Erfassungseinrichtung erfasst. Die den Umgebungsbereich beschreibenden Positionsdatenpunkte sind dabei Positionen von Objekten in dem Umgebungsbereich des Kraftfahrzeugs, insbesondere Abstände der Objekte relativ zum Kraftfahrzeug. Zum Erfassen der Objekte in dem Umgebungsbereich sowie deren Positionen kann die fahrzeugseitige Erfassungseinrichtung beispielsweise Abstandssensoren, insbesondere Ultraschallsensoren und/oder Radarsensoren und/oder Lasersensoren, aufweisen, welche die Objekte und deren Abstände relativ zum Kraftfahrzeug durch Aussenden eines Signals und Empfangen eines Echos des Signals erfassen können. Es kann aber auch vorgesehen sein, dass die Erfassungseinrichtung beispielsweise zumindest eine Kamera aufweist, welche den Umgebungsbereich in Bildern erfasst. Positionen der Objekte in dem Umgebungsbereich können aus den erfassten Bildern beispielsweise mittels Stereoalgorithmen bestimmt werden.

Aus den erfassten Positionsdatenpunkten werden die anhängerspezifischen Positionsdatenpunkte ausgewählt beziehungsweise extrahiert. Mit anderen Worten bedeutet dies, dass aus den in dem Umgebungsbereich erfassten Objekten die zum Anhänger gehörigen Objekte ausgewählt werden. Die zum Anhänger gehörigen Objekte sind dabei von der Erfassungseinrichtung erfasste Teile des Anhängers, beispielsweise Teile eines Anhängerrahmens und/oder Teile einer Deichsel, über welche der Anhänger mit der Anhängerkupplung des Kraftfahrzeugs verbindbar ist. Diejenigen Objekte, welche als nicht zu dem Anhänger gehörig identifiziert wurden, werden insbesondere als Hindernisse für das Kraftfahrzeug identifiziert beziehungsweise bestimmt.

Die ausgewählten anhängerspezifischen Positionsdatenpunkte werden zur Bestimmung der Kontur beziehungsweise der Anhängerkontur verwendet. Die Kontur kann beispielsweise eine Form des Anhängers beschreiben. Dabei wird die Hüllkurve durch die anhängerspezifischen Positionsdatenpunkte hindurch verlaufend und/oder die anhängerspezifischen Positionsdatenpunkte umschließend bestimmt. Anders ausgedrückt wird die Hüllkurve durch die anhängerspezifischen Positionsdatenpunkte gelegt und/oder um die anhängerspezifischen Positionsdatenpunkte herum gelegt. Die Hüllkurve schließt dabei die Fläche ein, welche den von dem Anhänger eingenommenen Bereich repräsentiert. Die Fläche wird dabei insbesondere in einer von einer Fahrzeuglängsrichtung und einer Fahrzeugquerrichtung aufgespannten Ebene bestimmt, sodass diese in die Umfeldkarte, welche beispielsweise zweidimensional in Fahrzeugkoordinaten bestimmt sein kann, eingetragen werden kann. Dabei kann es vorgesehen sein, dass die Anhängerkontur mehrmals bestimmt wird, sodass eine gemittelte Kontur oder eine den ungünstigsten Fall repräsentierende Kontur, eine so genannte "Worst-Case-" Kontur, bestimmt werden kann.

Dieser besonders genau bestimmte, von dem Anhänger eingenommene Bereich kann dann in die dem Umgebungsbereich abbildende Umfeldkarte eingetragen werden, auf deren Basis das Fahrerassistenzsystem eine Vielzahl von Funktionen ausführen kann. Nach dem Eintragen des eingenommenen Bereiches in die Umfeldkarte können dann weitere Objekte in dem Umgebungsbereich erfasst werden. Insbesondere werden dann aber nur diejenigen Objekte und deren Positionsdaten in die Umfeldkarte eingetragen, deren Positionsdaten nicht in dem bestimmten, von dem Anhänger eingenommenen Bereich liegen, also deren Positionsdaten nicht mit Positionsdaten des Bereiches in der Umfeldkarte übereinstimmen. Diese Objekte werden in der Umfeldkarte also als Hindernisse für das Kraftfahrzeug identifiziert. Die Positionsdaten derjenigen Objekte, welche in dem eingenommenen Bereich liegen, werden entweder eingetragen und markiert oder verworfen, da diese als zu dem Anhänger gehörig erkannt werden. Unter Positionsdaten, welche innerhalb des vorgegebenen Bereiches beziehungsweise in dem vorgegebenen Bereich liegen, sind auch Positionsdaten zu verstehen, welche auf einem Rand des Bereiches liegen. So kann beispielsweise das Fahrerassistenzsystem beim Rückwärtsfahren für einen Fahrer des Kraftfahrzeugs nur Warnhinweise bei Hindernissen, nicht aber bei Teilen des Anhängers, ausgeben und/oder das Fahrerassistenzsystem das Kraftfahrzeug nur bei Hindernissen, nicht aber bei Teilen des Anhängers, automatisch abbremsen.

In einer Ausgestaltung der Erfindung werden die aus einem vorgegebenen rückwärtigen, an ein Heck des Kraftfahrzeugs angrenzenden Teilbereich des Umgebungsbereiches erfassten Positionsdatenpunkte als anhängerspezifische Positionsdatenpunkte bestimmt, falls ein angekoppelter Zustand des Anhängers am Kraftfahrzeug erkannt wird. Dabei kann vorgesehen sein, dass der angekoppelte Zustand des Anhängers anhand einer elektrischen Anbindung des Anhängers an eine Steckdose des Kraftfahrzeugs erkannt wird. Um beispielsweise Bremslichter des Anhängers mit elektrischer Energie zu versorgen, kann der Anhänger, beispielsweise beim Ankoppeln an die Anhängerkupplung des Kraftfahrzeugs, zusätzlich elektrisch mit einer Energiequelle des Kraftfahrzeugs gekoppelt beziehungsweise verbunden werden. Dazu kann der Anhänger beispielsweise einen Stecker aufweisen, welcher mit der Steckdose des Kraftfahrzeugs unter Ausbildung einer Steckverbindung verbunden wird. Über diese elektrische Verbindung, beispielsweise die Steckverbindung, kann dem Anhänger elektrische Energie des Kraftfahrzeugs zugeführt werden. Anhand dieser elektrischen Anbindung, also sobald der elektrisch gekoppelte Zustand zwischen dem Anhänger und dem Kraftfahrzeug erfasst wurde, kann auch das Vorhandensein des Anhängers an dem Kraftfahrzeug erkannt werden. Wenn das Vorhandensein des Anhängers erkannt wurde, werden diejenigen Positionsdatenpunkte, welche aus dem Teilbereich des Umgebungsbereiches hinter dem Kraftfahrzeug erkannt wurden, als die anhängerspezifischen Positionsdatenpunkte ausgewählt. Durch das Erfassen des angekoppelten Zustandes des Anhängers und das Bestimmen der hinter dem Kraftfahrzeug liegenden Positionsdatenpunkte als anhängerspezifische Positionsdatenpunkte kann die Kontur besonders einfach bestimmt werden.

In einer weiteren Ausführungsform der Erfindung werden eine Geschwindigkeit und/oder eine durch das Kraftfahrzeug zurückgelegte Strecke und/oder eine Fahrtrichtung des Kraftfahrzeugs erfasst und die aus einem vorbestimmten rückwärtigen, an ein Heck des Kraftfahrzeugs angrenzenden Teilbereich des Umgebungsbereiches erfassten Positionsdatenpunkte als anhängerspezifische Positionsdatenpunkte bestimmt, falls die Geschwindigkeit zumindest über einen vorbestimmten Zeitraum einen vorbestimmten Schwellwert für die Geschwindigkeit und/oder die durch das Kraftfahrzeug zurückgelegte Strecke einen vorbestimmten Schwellwert für die Strecke überschreitet, und/oder das Kraftfahrzeug in eine Vorwärtsrichtung fährt. Anders ausgedrückt bedeutet dies, dass, insbesondere nach Erkennung des angekoppelten Zustandes des Anhängers, die anhängerspezifischen Positionsdatenpunkte erst bestimmt werden, nachdem das Kraftfahrzeug für eine gewisse Strecke und/oder Zeitdauer, insbesondere geradeaus in Vorwärtsrichtung, gefahren ist. Die Erkennung des Anhängers kann beispielsweise durch die bereits beschriebene Erkennung der elektrischen Anbindung erfolgen. Es kann aber auch vorgesehen sein, dass der Anhänger anhand derjenigen Positionsdatenpunkte, welche aus dem rückwärtigen, an das Heck angrenzenden Teilbereich stammen und ihre Position bezüglich des Kraftfahrzeugs bei der Fahrt des Kraftfahrzeugs nicht ändern, erkannt wird. Der Erfindung liegt hierbei die Erkenntnis zugrunde, dass sich der Anhänger mit der gleichen Geschwindigkeit bewegt wie das Kraftfahrzeug und somit der Abstand zwischen Anhänger und Kraftfahrzeug bei der Fahrt nicht verändert wird. Misst also die Erfassungseinrichtung wiederholt ein Objekt mit einem bestimmten Abstand zum Kraftfahrzeug, so ist es sehr wahrscheinlich, dass es sich bei der Messung um ein Teil des Anhängers handelt. Diese aus dem rückwärtigen Teilbereich stammenden, bezüglich des Kraftfahrzeugs unveränderten Positionsdaten können dann als anhängerspezifische Positionsdaten ausgewählt werden. Durch die Messung der Positionsdaten während der Fahrt ergibt sich der Vorteil, dass eine Wahrscheinlichkeit, dass sich bei einer Fahrt des Kraftfahrzeugs ein fremdes, nicht zu dem Anhänger gehöriges Objekt zwischen dem Anhänger und dem Kraftfahrzeug befindet, welches fälschlicherweise in die Anhängerkonturbestimmung einbezogen werden könnte, sehr gering ist. Anders ausgedrückt ist es nahezu unmöglich, dass sich während der Fahrt des Kraftfahrzeugs Hindernisse in direkter Nähe zum Kraftfahrzeug befinden. Die anhängerspezifischen Positionsdatenpunkte können somit besonders einfach und zuverlässig extrahiert werden.

Vorzugsweise wird eine Orientierung einer Längsachse des Anhängers bezüglich einer Längsachse des Kraftfahrzeugs bestimmt und die von der Hüllkurve eingeschlossene Fläche entlang der Längsachse des Anhängers orientiert bestimmt. Der Erfindung liegt hierbei die Erkenntnis zugrunde, dass der Anhänger, beispielsweise in Abhängigkeit von einem Lenkwinkel des Kraftfahrzeugs, ausschwenken kann und dadurch seine Position beziehungsweise Lage relativ zum Kraftfahrzeug ändern kann. Fährt das Kraftfahrzeug beispielsweise geradeaus, so befindet sich der Anhänger meist genau hinter dem Kraftfahrzeug, die Längsachse des Anhängers ist also entlang der Längsachse des Kraftfahrzeugs orientiert. Durch das Ausschwenken verändert sich eine Orientierung der Längsachse des Anhängers bezogen auf die Längsachse des Kraftfahrzeugs und der Anhänger kann sich beispielsweise seitlich hinter dem Kraftfahrzeug befinden. Durch die Erfassung der Orientierung der Längsachse des Anhängers bezüglich der Längsachse des Kraftfahrzeugs wird die von der Hüllkurve eingeschlossene Fläche und damit der eingenommene Bereich für die Umfeldkarte entlang der Längsachse des Anhängers orientiert bestimmt. Durch eine kontinuierliche beziehungsweise zu vorbestimmten Messzeitpunkten durchgeführte Erfassung der Orientierung der Längsachse des Anhängers kann dann die Lage des bereits bestimmten Bereiches in Abhängigkeit von der aktuellen Orientierung der Längsachse in der Umfeldkarte verändert werden. Anders ausgedrückt wird die Umfeldkarte in Abhängigkeit von der aktuellen Orientierung des Anhängers aktualisiert. Durch das Anpassen der Position des belegten Bereiches in der Umfeldkarte an die aktuelle Orientierung der Längsachse des Anhängers bezüglich der Längsachse des Kraftfahrzeugs kann beispielsweise ein Hindernis, welches sich in einem ausgeschwenkten Zustand des Anhängers direkt hinter dem Kraftfahrzeug befindet, zuverlässig als Hindernis erkannt werden und nicht fälschlicherweise als Teil des Anhängers identifiziert werden.

Dabei kann vorgesehen sein, dass eine Länge des Anhängers bestimmt und/oder vorgegeben wird und die Hüllkurve derart bestimmt wird, dass eine räumliche Ausdehnung der von der Hüllkurve eingeschlossenen Fläche entlang der Längsachse der Länge des Anhängers entspricht. Die Länge des Anhängers kann beispielsweise mittels der Erfassungseinrichtung bestimmt werden, beispielsweise in einem ausgeschwenkten Zustand des Anhängers. Es kann aber auch vorgesehen sein, dass die Länge des Anhängers vorgegeben wird. Dabei kann beispielsweise in einer fahrzeugseitigen Datenbank eine Länge für einen Referenzanhänger hinterlegt sein, welche für die Länge des tatsächlich am Kraftfahrzeug angehängten Anhängers angenommen wird. Auch kann die Länge von einem Nutzer des Kraftfahrzeugs, beispielsweise dem Fahrer des Kraftfahrzeugs, vorgegeben werden. Dabei kann der Fahrer die Länge beispielsweise in eine fahrzeugseitige und/oder nutzerseitige Eingabeeinrichtung eingeben, welche die eingegebene Länge beispielsweise der Steuereinrichtung des Fahrerassistenzsystems zum Bestimmen der Hüllkurve bereitstellt. Die Hüllkurve wird dabei derart bestimmt, dass die räumliche Erstreckung der durch die Hüllkurve begrenzten Fläche entlang der Längsachse des Anhängers, also die Länge des eingenommenen Bereiches, der vorgegebenen und/oder bestimmten Länge entspricht. Alternativ dazu kann die Länge des Anhängers auch als "unendlich" lang bestimmt beziehungsweise angenommen werden.

Gemäß einer Ausgestaltung der Erfindung wird zum Bestimmen der Orientierung der Längsachse des Anhängers ein Anhängewinkel zwischen der Längsachse des Kraftfahrzeugs und der Längsachse des Anhängers erfasst, wobei der Anhängewinkel insbesondere basierend auf von einer fahrzeugseitigen Rückfahrkamera erfassten Draufsicht des Anhängers bestimmt wird. Wenn der Anhänger nicht ausgeschwenkt ist, sich also beispielsweise bei einer Geradeausfahrt des Kraftfahrzeugs direkt hinter dem Kraftfahrzeug befindet, so verläuft die Längsachse des Anhängers entlang der Längsachse des Kraftfahrzeugs und der Anhängewinkel beziehungsweise Knickwinkel beträgt 0 Grad. Wenn der Anhänger seitlich ausgeschwenkt ist, so ist der Anhängewinkel zwischen den Längsachsen von 0 Grad verschieden. Zur Erfassung des Anhängewinkels kann die Rückfahrkamera in einem Heckbereich des Kraftfahrzeugs, welcher dem Anhänger zugewandt ist, angeordnet sein und einen rückseitigen Umgebungsbereich des Kraftfahrzeugs in Bildern erfassen. Die Steuereinrichtung des Fahrerassistenzsystems kann beispielsweise durch Vergleich der von der Rückfahrkamera erfassten Bilder des Anhängers in der Draufsicht mit einem Referenzbild, welches beispielsweise den Anhänger im unausgeschwenkten Zustand zeigt, auf einfache Weise den ausgeschwenkten Zustand des Anhängers sowie den zugehörigen Anhängewinkel bestimmen. Auch kann vorgesehen sein, dass basierend auf von einer, in einer Anhängerkupplung des Kraftfahrzeugs bereitgestellten Sensoreinrichtung erfassten Daten der Anhängewinkel bestimmt wird. Anders ausgedrückt kann die Sensoreinrichtung in der Anhängerkupplung den Anhängewinkel erfassen und diesen beispielsweise der Steuereinrichtung des Fahrerassistenzsystems bereitstellen. Die Steuereinrichtung des Fahrerassistenzsystems kann basierend auf dem erfassten Anhängewinkel die durch die Hüllkurve eingeschlossene Fläche entlang der Hüllkurve orientiert initial bestimmen und/oder die Lage der Fläche beziehungsweise des Bereiches in der Umfeldkarte aktualisieren.

Besonders bevorzugt wird eine Fahrtrichtung und/oder ein Lenkwinkel des Kraftfahrzeugs erfasst und zum Bestimmten der Orientierung der Längsachse des Anhängers die Längsachse des Anhängers auf der Längsachse des Kraftfahrzeugs liegend bestimmt, falls das Kraftfahrzeug in Vorwärtsrichtung fährt und/oder der Lenkwinkel des Kraftfahrzeugs zumindest über eine vorbestimmte Zeitdauer und/oder eine vorbestimmte Strecke etwa 0 Grad beträgt. Wenn der Lenkwinkel über die vorbestimmte Zeitdauer und/oder die vorbestimmte, von dem Kraftfahrzeug zurückgelegte Strecke in etwa 0 Grad beträgt, so fährt das Kraftfahrzeug geradeaus und es kann davon ausgegangen werden, dass sich der Anhänger gerade hinter dem Kraftfahrzeug befindet. Anders ausgedrückt, kann der Anhänger als unausgelenkt angenommen werden. Da im unausgelenkten Zustand des Anhänger die Längsachse des Anhängers entlang der Längsachse des Kraftfahrzeugs verläuft, kann insbesondere zur Erstbestimmung beziehungsweise Initialbestimmung der Hüllkurve, und damit des eingenommenen Bereiches, die von der Hüllkurve eingeschlossene Fläche entlang der Längsachse des Kraftfahrzeugs orientiert bestimmt und in die Umfeldkarte eingetragen werden. Daraus ergibt sich der Vorteil, dass zur Initialbestimmung kein Anhängewinkel bestimmt werden muss. Das Verfahren ist somit besonders einfach gestaltet. Der Anhängewinkel kann dann kontinuierlich beziehungsweise zu vorbestimmten Messzeitpunkten erfasst werden. Basierend auf den erfassten aktuellen Anhängewinkeln kann dann die Umfeldkarte angepasst beziehungsweise aktualisiert werden.

Eine Ausführungsform der Erfindung sieht vor, dass die Kontur als eine, insbesondere spitz zulaufend, ellipsenförmige Hüllkurve bestimmt wird, deren Hauptachse sich entlang der Längsachse des Anhängers, insbesondere ausgehend von einem heckseitigen Stützpunkt am Kraftfahrzeug, erstreckend bestimmt wird. Unter einer spitz zulaufend ellipsenförmigen Hüllkurve ist hier eine augenförmige beziehungsweise paddelbootförmige Hüllkurve zu verstehen, wobei Spitzen der spitz zulaufenden ellipsenförmigen Hüllkurve auf der Hauptachse der Ellipse liegen. Die Hauptachse wird entlang der Längsachse des Anhängers orientiert bestimmt, wobei die von der Hüllkurve eingeschlossene Fläche bezüglich der Längsachse des Anhängers insbesondere symmetrisch ausgebildet ist. Bei einer spitz zulaufend ellipsenförmigen Hüllkurve wird für die Umfeldkarte eine der Spitzen angrenzend an den heckseitigen Stützpunkt am Kraftfahrzeug, also angrenzend an den Heckbereich des Kraftfahrzeugs, bestimmt. Als der Stützpunkt kann beispielsweise die Anhängerkupplung des Kraftfahrzeugs festgelegt werden. Der Stützpunkt dient insbesondere als ein Fixpunkt in der Umfeldkarte, um welchen der bestimmte Bereich beispielsweise in Abhängigkeit des Anhängewinkels rotiert werden kann. Dabei liegen die seitlich äußeren anhängerspezifischen Positionsdatenpunkte auf der Hüllkurve. Die zwischen den seitlich äußeren Positionsdatenpunkten liegenden, inneren anhängerspezifischen Positionspunkte liegen auf beziehungsweise in der von der Hüllkurve eingeschlossenen Fläche. Die ellipsenförmige Hüllkurve kann dabei so bestimmt werden, dass die seitlich äußeren anhängerspezifischen Positionsdatenpunkte auf der Nebenachse auf der Hüllkurve liegen, und somit eine Breite des Bereiches durch einen Abstand der seitlich äußeren anhängerspezifischen Positionsdatenpunkte zueinander festgelegt ist. Vorzugsweise liegen die äußeren anhängerspezifischen Positionsdatenpunkte auf der Hüllkurve zwischen dem Stützpunkt und den Nebenachsen. Eine so gebildete Hüllkurve kann besonders einfach bestimmt werden.

In einer weiteren Ausführungsform wird die Kontur als eine fünfeckförmige Hüllkurve bestimmt, wobei zwei Seitenkanten der fünfeckigen Hüllkurve parallel zur Längsachse des Anhängers erstreckend bestimmt werden und zwei weitere Seitenkanten ausgehend von den parallel verlaufenden Seitenkanten spitz in Richtung eines heckseitigen Stützpunktes am Kraftfahrzeug zulaufend bestimmt werden. Die beiden parallel verlaufenden Seitekanten der Hüllkurve bilden Seitenränder der Kontur aus, durch welche der eingenommene Bereich senkrecht zur Längsachse des Anhängers, also eine Breite des Bereiches, begrenzt wird. Ein Abstand der Seitenränder zueinander bildet also die Breite des Bereiches aus. Die von der Hüllkurve eingeschlossene Fläche beziehungsweise der eingenommene Bereich setzt sich hier also aus einem rechteckigen Flächenstück und einem daran angrenzenden dreieckigen Flächenstück zusammen, wobei eine Spitze des dreieckigen Flächenstückes für die Umfeldkarte insbesondere angrenzend an den Stützpunkt, beispielsweise die Anhängerkupplung, bestimmt wird. Die seitlich äußeren anhängerspezifischen Positionsdatenpunkte liegen dabei auf den zwei anderen Spitzen des dreieckigen Flächenstücks. Außerdem bilden die seitlich äußeren anhängerspezifischen Positionsdatenpunkte diejenigen Eckpunkte der fünfeckigen Hüllkurve, von welchen aus sich die parallel entlang der Längsachse des Anhängers verlaufenden Seitenkanten, also die Seitenränder der Hüllkurve, erstrecken. Das rechteckige Flächenstück wird dabei dem Rahmen des Anhängers zugeordnet beziehungsweise repräsentiert den Rahmen des Anhängers. Das dreieckige Flächenstück wird der Deichsel zugeordnet beziehungsweise repräsentiert eine Fläche der Deichsel des Anhängers. Da die Anhängerkontur üblicherweise immer an der Position der Anhängerkupplung beginnt, ist es sinnvoll, die Deichsel beim Bestimmen des von dem Anhänger eingenommenen Bereiches zu berücksichtigen. Selbst wenn im Bereich der Deichsel keine, zu der Deichsel gehörigen Positionsdaten von der Erfassungseinrichtung erfasst wurden, wird aber davon ausgegangen, dass sich an dieser Stelle eine Deichsel befindet, welche von der Anhängerkupplung bis zum Anhängerrahmen reicht. Der von der Deichsel eingenommene Bereich kann dann in die Umfeldkarte angrenzend an die Anhängerkupplung eingetragen werden.

In einer weiteren Ausführungsform der Erfindung wird die Kontur als eine polygonzugförmige Hüllkurve bestimmt, wobei eine Breite des Bereiches begrenzende Seitenränder der Kontur als sich parallel zu der Längsachse des Anhängers erstreckende, seitliche Hüllkurvenabschnitte bestimmt werden und eine, einem Heck des Kraftfahrzeugs zugewandte Vorderseite der Kontur des Anhängers als ein vorderseitiger, die erfassten anhängerspezifischen Positionsdatenpunkte umfassender Hüllkurvenabschnitt bestimmt wird. Die beiden parallel verlaufenden Seitenkanten der Hüllkurve bilden also die Seitenränder der Kontur und damit die Seitenbegrenzungen des Bereiches aus. Ein Abstand der Seitenränder zueinander bildet also die Breite des Bereiches aus. Die von der Hüllkurve eingeschlossene Fläche beziehungsweise der eingenommene Bereich ist hier vieleckig ausgebildet. Dabei wird der vordere Hüllkurvenabschnitt derart bestimmt, dass er durch die erfassten anhängerspezifischen Positionsdatenpunkte hindurch verläuft. Somit kann die Kontur besonders genau bestimmt werden, da der vordere Hüllkurvenabschnitt im Wesentlichen den tatsächlichen Verlauf der dem Heckbereich des Kraftfahrzeugs zugewandten Vorderseite der Anhängerkontur wiedergibt.

Dabei kann es vorgesehen sein, dass aus den anhängerspezifischen Positionsdatenpunkten die seitlich äußeren Positionsdatenpunkte bestimmt werden und seitliche Hüllkurvenabschnitte durch die seitlich äußeren Positionsdatenpunkte verlaufend bestimmt werden. Als seitlich äußere Positionsdatenpunkte können diejenigen Positionsdatenpunkte identifiziert werden, welche den größten Abstand zur Längsachse des Anhängers aufweisen. Mit anderen Worten bedeutet dies, dass der Abstand der beiden seitlichen äußeren Positionsdatenpunkte zueinander die Breite des Bereiches vorgibt. Die Seitenränder der Kontur werden dann jeweils von einem der seitlich äußeren Positionsdatenpunkte ausgehend parallel zueinander entlang der Längsachse des Anhängers verlaufend bestimmt. Mittels des Verfahrens kann der eingenommene Bereich somit besonders genau bestimmt werden.

Vorzugsweise wird die dem Heck des Kraftfahrzeugs zugewandte Vorderseite der Kontur des Anhängers als der vorderseitige, die erfassten anhängerspezifischen Positionsdatenpunkte und zusätzlich einen heckseitigen Stützpunkt am Kraftfahrzeug umfassende Hüllkurvenabschnitt bestimmt. Als der heckseitige Stützpunkt am Kraftfahrzeug kann beispielsweise wiederum die Anhängerkupplung des Kraftfahrzeugs vorgegeben werden. Der vorderseitige Hüllkurvenabschnitt wird dabei derart bestimmt, dass er durch die erfassten anhängerspezifischen Positionsdatenpunkte und den Stützpunkt verläuft. Somit kann in vorteilhafter Weise wiederum die Deichsel des Anhängers berücksichtigt werden, auch wenn diese durch die Erfassungseinrichtung nicht erfasst wurde.

Bevorzugt wird ein Toleranzbereich vorgegeben und angrenzend an die Hüllkurve bestimmt, wobei der von dem Anhänger eingenommene Bereich als die von der Hüllkurve eingeschlossene Fläche und der Toleranzbereich bestimmt wird. Mit anderen Worten bedeutet dies, dass der von dem Anhänger eingenommene Bereich um den Toleranzbereich erweitert wird. Es wird also die Anhängerkontur, also der eingenommene Bereich, um ein vorbestimmtes Maß beziehungsweise einen vorbestimmten Faktor vergrößert. Somit können in vorteilhafter Weise Grenzfälle ausgeschlossen werden.

Die Erfindung betrifft außerdem ein Fahrerassistenzsystem für ein Kraftfahrzeug zum Bestimmen eines durch einen Anhänger des Kraftfahrzeugs belegten Bereiches in einem Umgebungsbereich des Kraftfahrzeugs. Das Fahrerassistenzsystem umfasst eine fahrzeugseitige Steuereinrichtung, welche dazu ausgelegt ist, von einer fahrzeugseitigen Erfassungseinrichtung erfasste Positionsdatenpunkte, welche den Umgebungsbereich des Kraftfahrzeugs beschreiben, zu empfangen, anhängerspezifische Positionsdatenpunkten, welche dem Anhänger zugeordnet sind, aus den erfassten Positionsdatenpunkten auszuwählen, eine Kontur des Anhängers aus den anhängerspezifischen Positionsdatenpunkten als eine, eine Fläche einschließende Hüllkurve derart zu bestimmen, dass die anhängerspezifischen Positionsdatenpunkte auf der Hüllkurve und/oder innerhalb der durch die Hüllkurve eingeschlossenen Fläche liegen, und die durch die Hüllkurve eingeschlossene Fläche als den von dem Anhänger belegten Bereich zu bestimmen. Das Fahrerassistenzsystem kann beispielsweise als ein automatisches Notbremssystem und/oder als ein Parkassistenzsystem ausgestaltet sein.

Ein erfindungsgemäßes Kraftfahrzeug umfasst ein erfindungsgemäßes Fahrerassistenzsystem. Das Kraftfahrzeug ist insbesondere als ein Personenkraftwagen ausgestaltet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Mit Angaben "oben", "unten", "vorne", "hinten", "horizontal", "vertikal", "innen", "außen", "seitlich", "Fahrzeughochrichtung" (F_{H}), "Fahrzeuglängsrichtung " (F_{L}), "Fahrzeugquerrichtung" (F_{Q}), etc. sind bei einem vor dem Kraftfahrzeug stehenden und in Richtung des Kraftfahrzeugs blickenden Beobachter gegebene Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen sowie nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Im Folgenden wird die Erfindung nun anhand eines bevorzugten Ausführungsbeispiels wie auch unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs mit einem Anhänger; und
- Fig. 2 bis 6: schematische Darstellungen des Kraftfahrzeugs in einer Umfeldkarte mit verschiedenen Ausführungsformen des von dem Anhänger eingenommenen Bereiches.

In den Figuren sind gleiche sowie funktionsgleiche Elemente mit den gleichen Bezugszeichen versehen.

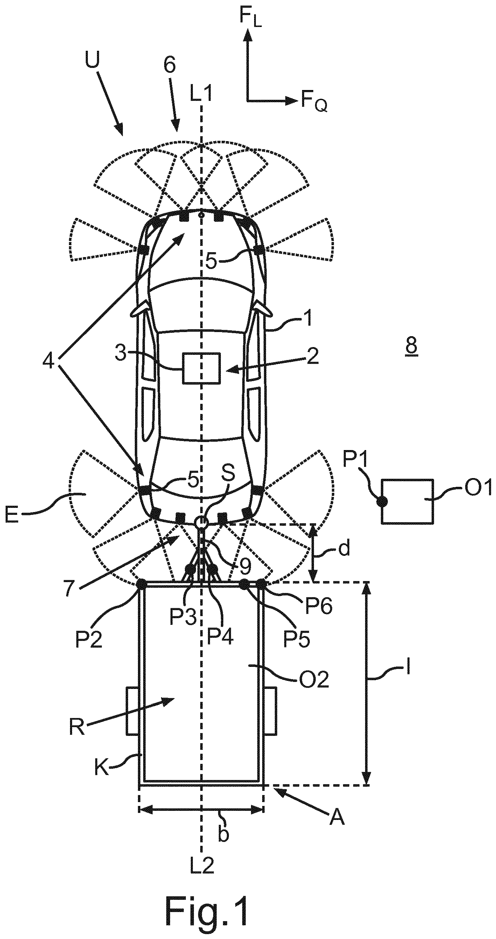

Fig. 1 zeigt ein Kraftfahrzeug 1 mit einem Fahrerassistenzsystem 2. Das Kraftfahrzeug 1 ist vorliegend als ein Personenkraftwagen ausgebildet. Das Fahrerassistenzsystem 2 kann beispielsweise als ein automatischer Notbremsassistent und/oder als ein Parkassistent ausgestaltet sein. Das Fahrerassistenzsystem 2 umfasst eine Steuereinrichtung 3, welche beispielsweise durch ein fahrzeugseitiges Steuergerät ausgebildet sein kann. Das Kraftfahrzeug 1 umfasst außerdem eine Erfassungseinrichtung 4, welche im vorliegenden Fall zwölf Ultraschallsensoren 5 aufweist. Hier sind sechs Ultraschallsensoren 5 in einem Frontbereich 6 des Kraftfahrzeugs 1 angeordnet und sechs weitere Ultraschallsensoren 5 in einem Heckbereich 7 des Kraftfahrzeugs 1 angeordnet. Die Erfassungseinrichtung 4 ist dazu ausgelegt, einen Umgebungsbereich 8 des Kraftfahrzeugs zu überwachen und Objekte 01, 02 in dem Umgebungsbereich 8 zu erfassen. Dabei sind die in dem Frontbereich 6 angeordneten Ultraschallsensoren 5 dazu ausgelegt, insbesondere den Umgebungsbereich 8 vor dem Kraftfahrzeug 1 zu erfassen. Die in dem Heckbereich 7 angeordneten Ultraschallsensoren 5 sind dazu ausgelegt, insbesondere den Umgebungsbereich 8 hinter dem Kraftfahrzeug 1, also einen rückwärtigen Umgebungsbereich, zu erfassen. Die Erfassungseinrichtung 4 ist außerdem dazu ausgelegt, Positionsdatenpunkte P1, P2, P3, P4, P5, P6 der Objekte O1, 02 in dem Umgebungsbereich 8 des Kraftfahrzeugs 1, insbesondere Abstände der Objekte O1, 02 relativ zum Kraftfahrzeug 1, zu erfassen und der Steuereinrichtung 3 des Fahrerassistenzsystems 2 bereitzustellen.

Im vorliegenden Fall ist das Objekt 02 ein Anhänger A, welcher an das Kraftfahrzeug 1 angekoppelt ist, das Kraftfahrzeug 1 befindet sich also in einem Anhängerbetrieb. Der Anhänger A weist einen Anhängerrahmen R und eine Deichsel 9 auf. Über die Deichsel 9 des Anhängers A kann der Rahmen R mit einer hier nicht gezeigte Anhängerkupplung des Kraftfahrzeugs 1 mechanisch verbunden werden. Das Fahrerassistenzsystem 2 kann beispielsweise über eine elektrische Anbindung des Anhängers A an das Kraftfahrzeug 1 erfassen, dass der Anhänger A an das Kraftfahrzeug 1 angekoppelt ist. Eine solche elektrische Anbindung kann beispielsweise eine Steckverbindung zwischen einem Stecker des Anhängers A und einer Steckdose des Kraftfahrzeugs 1 sein, über welche Steckverbindung der Anhänger A mit elektrischer Energie des Kraftfahrzeugs 1 versorgt wird. Durch das Ankoppeln des Anhängers A am Kraftfahrzeug 1 befindet sich der Anhänger A zumindest bereichsweise in einem Erfassungsbereich E der in dem Heckbereich 7 angeordneten Ultraschallsensoren 5. Die Ultraschallsensoren 5 im Heckbereich 7 des Kraftfahrzeugs 1 erfassen also zumindest teilweise als das Objekt 02 sowie dessen Positionsdatenpunkte P2 bis P6 Teile des Anhängers A, also Teile des Rahmens R und/oder der Deichsel 9.

Die Steuereinrichtung 3 des Kraftfahrzeugs 1 ist nun dazu ausgelegt, aus den erfassten Positionsdatenpunkten P1 bis P6 die anhängerspezifischen Positionsdatenpunkte P2 bis P6 zu extrahieren. Anders ausgedrückt, ist die Steuereinrichtung 3 dazu ausgelegt, zu erkennen, dass der Positionsdatenpunkt P1 zu dem Objekt O1 gehört, welches in dem Umgebungsbereich 8 des Kraftfahrzeugs 1 ein Hindernis für das Kraftfahrzeug 1 darstellt. Außerdem kann die Steuereinrichtung 3 erkennen, dass die Positionsdatenpunkte P2 bis P6 zu dem Anhänger A gehören, also anhängerspezifische Positionsdatenpunkte P2 bis P6 sind. Zum Erkennen der anhängerspezifischen Positionsdatenpunkte P2 bis P6 kann die Steuereinrichtung 3 beispielsweise davon ausgehen, dass in dem angekoppelten Zustand des Anhängers A am Kraftfahrzeug 1 alle Positionsdatenpunkte, welche von der Erfassungseinrichtung 4 in einem an den Heckbereich 7 des Kraftfahrzeugs 1 angrenzenden Teilbereich des Umgebungsbereiches 8 erfasst wurden, also alle Positionsdatenpunkte hinter dem Kraftfahrzeug 1, anhängerspezifische Positionsdatenpunkte P2 bis P6 sind. Auch kann die Steuereinrichtung 3 die anhängerspezifischen Positionsdatenpunkte P6 bis P6 aus den während einer Fahrt des Kraftfahrzeugs 1 erfassten Positionsdatenpunkten P1 bis P6 auswählen. Wenn das Kraftfahrzeugs 1 beispielsweise über eine vorbestimmte Zeitdauer und/oder eine vorbestimmte Strecke in Vorwärtsrichtung gefahren ist, so kann die Steuereinrichtung 3 diejenigen Positionsdatenpunkte P2 bis P6 auswählen, welche bezüglich einer Position des Kraftfahrzeugs 1 unverändert sind, und diese als zu dem Anhänger A gehörig bestimmen. Während der Fahrt des Kraftfahrzeugs 1 kann die Steuereinrichtung 3 nämlich davon ausgehen, dass sich kein Hindernis zwischen dem Anhänger A und dem Kraftfahrzeug 1 befindet, sodass diejenigen aus dem rückwärtigen Teilbereich erfassten Positionsdatenpunkte anhängerspezifische Positionsdatenpunkte P2 bis P6 sind.

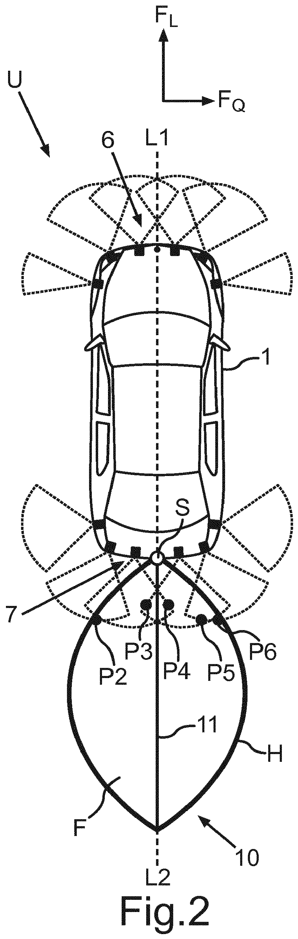

Um nun für eine den Umgebungsbereich 8 des Kraftfahrzeugs 1 abbildende Umfeldkarte U (siehe Fig. 2 bis 6) einen von dem Anhänger A eingenommenen Bereich 10 zu bestimmen, wird eine Kontur K des Anhängers A bestimmt. Die Kontur K des Anhängers A wird dabei als eine, eine Fläche F einschließende Hüllkurve H bestimmt, wobei die Fläche F den eingenommenen Bereich 10 ausbildet und die Hüllkurve einen Rand des Bereiches 10 ausbildet. Die Hüllkurve H wird dabei derart bestimmt, dass die anhängerspezifischen Positionsdatenpunkte P2 bis P6 auf der Hüllkurve H und/oder in der Fläche F liegen. Anders ausgedrückt liehen die Positionsdatenpunkte P2 bis P6 in dem eingenommenen Bereich 10.

Zur Bestimmung der Kontur K wird insbesondere eine Lage des Anhängers A bezüglich des Kraftfahrzeugs 1 berücksichtigt. Es wird also berücksichtig, ob der Anhänger A ausgeschwenkt ist oder sich direkt hinter dem Kraftfahrzeug 1 befindet. Dazu wird eine Orientierung einer Längsachse L2 des Anhängers A bezüglich einer Längsachse L1 des Kraftfahrzeugs 1 bestimmt, sodass der eingenommene Bereich 10 für die Umfeldkarte U sich entlang der Längsachse L2 des Anhängers A erstreckend bestimmt wird. Zur Erfassung der Orientierung kann ein Anhängewinkel zwischen der Längsachse L1 des Kraftfahrzeugs 1 und der Längsachse L2 des Anhängers, beispielsweise mittels einer Rückfahrkamera des Kraftfahrzeugs 1, erfasst werden. Wenn sich der Anhänger A, wie in Fig. 1 gezeigt, genau hinter dem Kraftfahrzeug 1 befindet, so beträgt der Anhängewinkel 0 Grad und die Längsachse L2 des Anhängers A verläuft entlang der Längsachse L1 des Kraftfahrzeugs 1. Die Fläche F wird dabei entlang der Längsachse L2 des Anhängers A orientiert bestimmt. Die Form der Kontur K kann insbesondere einmalig bestimmt werden, wobei die Lage der Fläche F relativ zum Kraftfahrzeug 1 in der Umfeldkarte U in Abhängigkeit von der kontinuierlich erfassten Orientierung der Längsachse L2 des Anhängers A angepasst werden kann.

Insbesondere kann zu Initialbestimmung der Kontur K des Anhängers A die Kontur K erst bestimmt werden, nachdem das Kraftfahrzeug 1 über eine längere Strecke beziehungsweise eine längere Zeit geradeaus gefahren ist. Die Geradeausfahrt des Kraftfahrzeugs 1 kann beispielsweise anhand eines Lenkwinkels des Kraftfahrzeugs 1 erkannt werden. Bei der Geradeausfahrt kann nämlich davon ausgegangen werden, dass sich der Anhänger A genau hinter dem Kraftfahrzeug 1 befindet und die Längsachse L2 des Anhängers A entlang der Längsachse L1 des Kraftfahrzeugs 1 verläuft. Dann kann die Fläche F entlang der Längsachse L1 des Kraftfahrzeugs 1 verlaufend bestimmt werden. Die Lage der Fläche F kann dann wieder in Abhängigkeit von der aktuell erfassten Orientierung der Längsachse L2 des Anhängers A angepasst werden.

Die Fig. 2 bis 6 zeigen verschiedene Möglichkeiten, wie die Kontur K des Anhängers A für die Umfeldkarte U bestimmt werden kann. Die Umfeldkarte U kann beispielsweise in einer zweidimensionalen Ebene in Fahrzeugkoordinaten F_{L}, F_{Q} (F_{L}: Fahrzeuglängsrichtung, F_{Q}: Fahrzeugquerrichtung) bestimmt werden. Fig. 2 zeigt beispielsweise, dass die Hüllkurve H ellipsenförmig, insbesondere spitz zulaufend ellipsenförmig, bestimmt wird. Dabei wird die Hüllkurve H derart bestimmt, dass sich seitlich äußere, anhängerspezifische Positionsdatenpunkte P2, P6 auf der Hüllkurve H und innere Positionsdatenpunkte P3, P4, P5 auf beziehungsweise in der Fläche F befinden. Außerdem wird die Hauptachse 11 der ellipsenförmigen Hüllkurve H auf der Längsachse L2 des Anhängers A verlaufend orientiert. Die ellipsenförmige Hüllkurve H wird hier angrenzend an einen Stützpunkt S am Heck 7 des Kraftfahrzeugs 1 bestimmt. Als der Stützpunkt S kann beispielsweise die Anhängerkupplung des Kraftfahrzeugs 1 festgelegt werden.

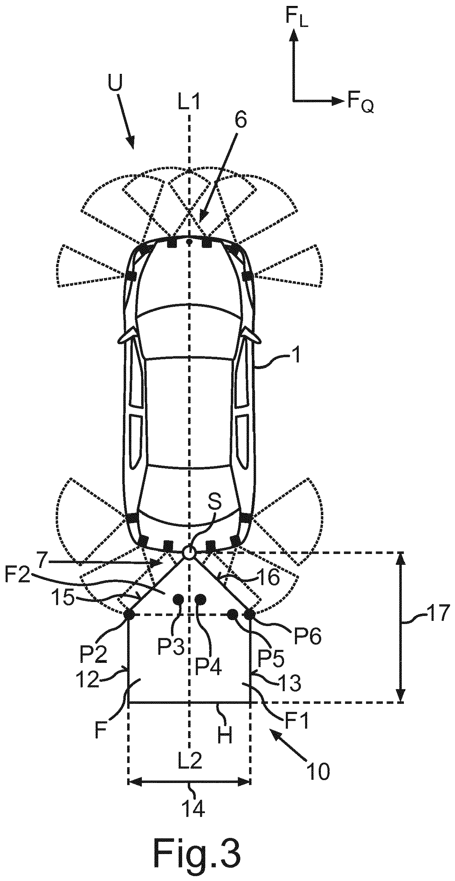

Fig. 3 zeigt eine Ausführungsform, in welcher die Hüllkurve H fünfeckförmig bestimmt ist. Dabei verlaufen zwei Seitenkanten 12, 13 der fünfeckigen Hüllkurve H parallel zur Längsachse L2 des Anhängers A. Die Seitenkanten 12, 13 sind hier ausgehend von seitlich äußeren, anhängerspezifischen Positionsdatenpunkten P2, P6 bestimmt und entsprechen Seitenrändern der Kontur K. Ein Abstand der Seitenkanten 12, 13 zueinander bildet die Breite 14 des eingenommenen Bereiches 10 aus. Dadurch, dass die Seitenkanten 12, 13 durch die seitlich äußeren, anhängerspezifischen Positionsdatenpunkten P2, P6 verlaufen, entspricht die Breite 14 des Bereiches 10 einer Breite b des Rahmens R des Anhängers A (siehe Fig. 1). Zwei weitere Seitenkanten 15, 16 der fünfeckigen Hüllkurve H sind ausgehend von den seitlich äußeren, anhängerspezifischen Positionsdatenpunkten P2, P6 spitz in Richtung des Stützpunktes S zulaufend bestimmt.

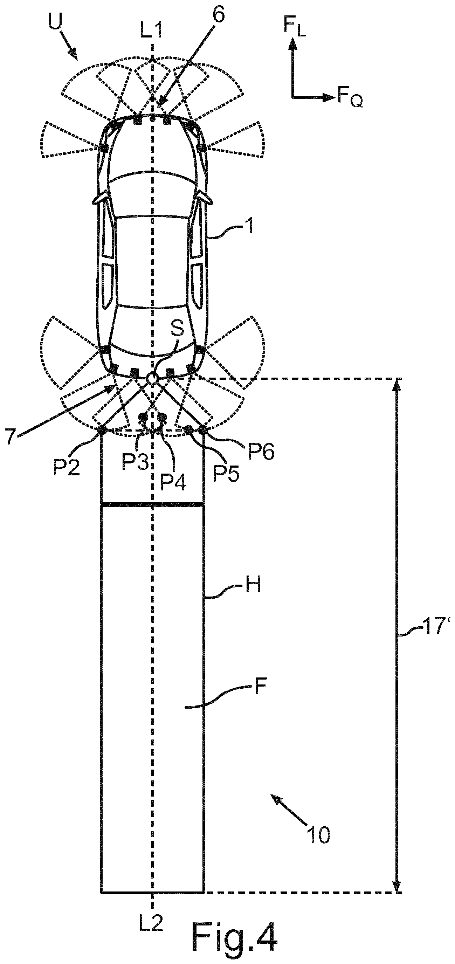

Der Bereich 10 kann hier in zwei Flächenstücke F1, F2 unterteilt werden, wobei das erste Flächenstück F1 rechteckig ausgebildet ist und den Rahmen R des Anhängers A repräsentiert, und das zweite Flächenstück F2 dreieckig ausgebildet ist und die Deichsel 9 des Anhängers A repräsentiert. Die inneren anhängerspezifischen Positionsdatenpunkte P3, P4, welche hier zur Deichsel 9 gehören, liegen hier in dem zweiten Flächenstück F2. Zur Bestimmung einer Länge 17 des Bereiches 10 können beispielsweise eine Länge l des Anhängerrahmens R und eine Länge d der Deichsel 9 als eine Länge des Anhängers A erfasst werden (siehe Fig. 1). Es kann aber auch vorgesehen sein, dass die Länge 17 des Bereiches 10 vorgegeben ist und beispielsweise in einer fahrzeugseitigen Datenbank hinterlegt ist. Auch kann ein Nutzer des Kraftfahrzeug 1 die Länge 17 beispielsweise durch Eingabe eines Wertes für die Länge l des Anhängerrahmens R und die Länge d der Deichsel 9 vorgeben, welche dann der Steuereinrichtung 3 des Fahrerassistenzsystems 2 bereitgestellt wird. Fig.4 zeigt die Ausführungsform der Hüllkurve H gemäß Fig. 3, wobei die Länge 17' des Bereiches 10 als "unendlich" lang entlang der Längsachse L2 des Anhängers A angenommen ist. Es ist also eine Maximallänge für den Anhänger A vorgegeben.

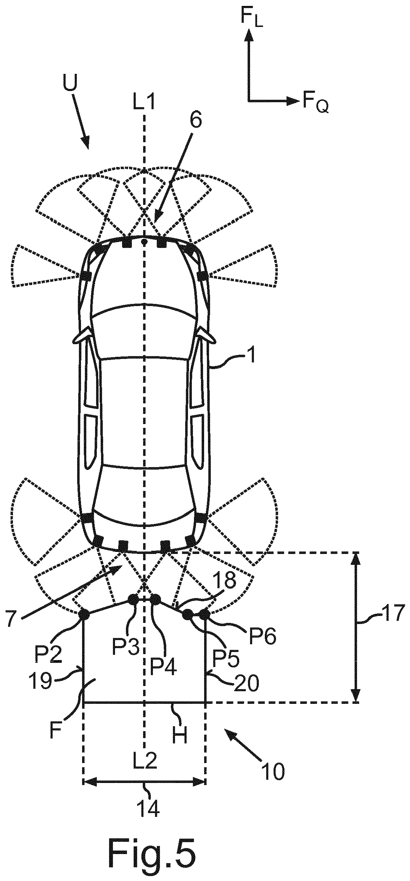

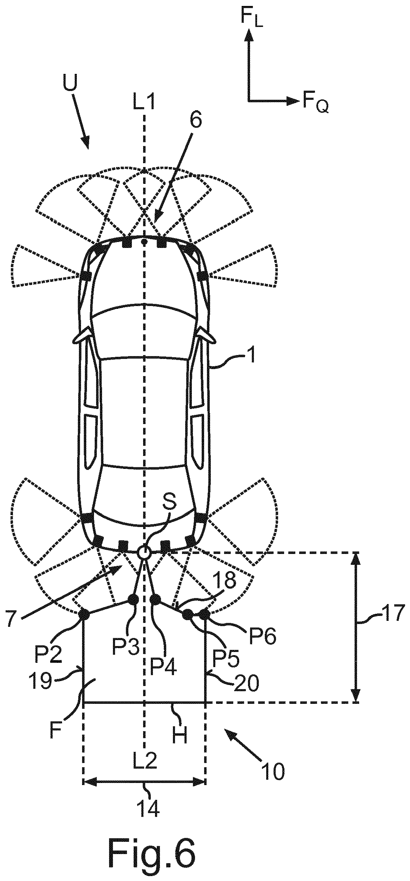

In Fig. 5 ist die Hüllkurve H als eine polygonzugförmige Hüllkurve H bestimmt. Dazu werden die anhängerspezifischen Positionsdatenpunkte P2 bis P6 auf einem vorderseitigen Hüllkurvenabschnitt 18 liegend bestimmt, wobei der vorderseitige Hüllkurvenabschnitt 18 eine dem Heckbereich 7 des Kraftfahrzeugs 1 zugewandte Vorderseite der Kontur K ausbildet. Seitliche Hüllkurvenabschnitte 19, 20 werden ausgehend von den seitlich äußeren anhängerspezifischen Positionsdatenpunkten P2, P6 parallel zu der Längsachse L2 des Anhängers A verlaufend bestimmt. Die seitlichen Hüllkurvenabschnitte 19, 20 entsprechen Seitenrändern der Kontur K. Die Breite 14 des Bereiches 10 entspricht hier wiederum der Breite b des Anhängers A. Fig. 6 zeigt die Ausführungsform der Hüllkurve H gemäß Fig. 5, wobei der vorderseitige Hüllkurvenabschnitt 18 zusätzlich zu den anhängerspezifischen Positionsdatenpunkten P2 bis P6 den Stützpunkt S umfasst, sodass der Bereich 10 angrenzend an den Heckbereich 7 des Kraftfahrzeugs 1 bestimmt ist und in die Umfeldkarte U eingetragen ist. Gemäß Fig. 6 ist also wiederum die Deichsel 9 als ein Teil des Anhängers A für den Bereich 10 und damit für die Umfeldkarte U berücksichtigt.

## Patentansprüche

1. Verfahren zum Bestimmen eines durch einen mit einem Kraftfahrzeug (1) verbundenen Anhänger (A) eingenommenen Bereiches (10) in einem Umgebungsbereich (8) des Kraftfahrzeugs (1) für eine den Umgebungsbereich (8) abbildende Umfeldkarte (U), mit den Schritten:
- Empfangen von durch eine fahrzeugseitige Erfassungseinrichtung (4) erfassten Positionsdatenpunkten (P1, P2, P3, P4, P5, P6), welche den Umgebungsbereich (8) des Kraftfahrzeugs (1) beschreiben;
- Auswählen von anhängerspezifischen Positionsdatenpunkten (P2, P3, P4, P5, P6), welche dem Anhänger (A) zugeordnet werden, aus den empfangenen Positionsdatenpunkten (P1, P2, P3, P4, P5, P6);
- Bestimmen einer Kontur (K) des Anhängers (A) aus den anhängerspezifischen Positionsdatenpunkten (P2, P3, P4, P5, P6) als eine, eine Fläche (F) einschließende Hüllkurve (H) derart, dass die anhängerspezifischen Positionsdatenpunkte (P2, P3, P4, P5, P6) auf der Hüllkurve (H) und/oder innerhalb der durch die Hüllkurve (H) eingeschlossenen Fläche (F) liegen;
- Bestimmen der durch die Hüllkurve (H) eingeschlossenen Fläche (F) als den von dem Anhänger (A) eingenommenen Bereich (10).

2. Verfahren nach Anspruch 1,
**dadurch gekennzeichnet, dass**
die aus einem vorgegebenen rückwärtigen, an ein Heck (7) des Kraftfahrzeugs (1) angrenzenden Teilbereich des Umgebungsbereiches (8) erfassten Positionsdatenpunkte als anhängerspezifische Positionsdatenpunkte (P2, P3, P4, P5, P6) bestimmt werden, falls ein angekoppelter Zustand des Anhängers (A) am Kraftfahrzeug (1) erkannt wird.

3. Verfahren nach Anspruch 1 oder 2,
**dadurch gekennzeichnet, dass**
eine Geschwindigkeit und/oder eine durch das Kraftfahrzeug (1) zurückgelegte Strecke und/oder eine Fahrtrichtung des Kraftfahrzeugs (1) erfasst werden und die aus einem vorbestimmten rückwärtigen, an ein Heck (7) des Kraftfahrzeugs (1) angrenzenden Teilbereich des Umgebungsbereiches (8) erfassten Positionsdatenpunkte als anhängerspezifische Positionsdatenpunkte (P2, P3, P4, P5, P6) bestimmt werden, falls die Geschwindigkeit zumindest über einen vorbestimmten Zeitraum einen vorbestimmten Schwellwert für die Geschwindigkeit und/oder die durch das Kraftfahrzeug (1) zurückgelegte Strecke einen vorbestimmten Schwellwert für die Strecke überschreitet und/oder das Kraftfahrzeug (1) in eine Vorwärtsrichtung fährt.

4. Verfahren nach einem der vorhergehenden Ansprüche,
**dadurch gekennzeichnet, dass**
eine Orientierung einer Längsachse (L2) des Anhängers (A) bezüglich einer Längsachse (L1) des Kraftfahrzeugs (1) bestimmt wird und die von der Hüllkurve (H) eingeschlossene Fläche (F) entlang der Längsachse (L2) des Anhängers (A) orientiert bestimmt wird.

5. Verfahren nach Anspruch 4,
**dadurch gekennzeichnet, dass**
eine Länge (l) des Anhängers (A) bestimmt und/oder vorgegeben wird und die Hüllkurve (H) derart bestimmt wird, dass eine räumliche Ausdehnung (17, 17') der von der Hüllkurve (H) eingeschlossenen Fläche (F) entlang der Längsachse (L2) des Anhängers (A) der vorgegebenen und/oder bestimmten Länge (l) des Anhängers (A) entspricht.

6. Verfahren nach Anspruch 4 oder 5,
**dadurch gekennzeichnet, dass**
zum Bestimmen der Orientierung der Längsachse (L2) des Anhängers (A) ein Anhängewinkel zwischen der Längsachse (L1) des Kraftfahrzeugs (1) und der Längsachse (L2) des Anhängers (A) erfasst wird, wobei der Anhängewinkel insbesondere basierend auf von einer fahrzeugseitigen Rückfahrkamera erfassten Draufsicht des Anhängers (A) bestimmt wird.

7. Verfahren nach einem der Ansprüche 4 bis 6,
**dadurch gekennzeichnet, dass**
eine Fahrtrichtung und/oder ein Lenkwinkel des Kraftfahrzeugs (1) erfasst werden und zum Bestimmten der Orientierung der Längsachse (L2) des Anhängers (A) die Längsachse (L2) des Anhängers (L1) entlang der Längsachse (L1) des Kraftfahrzeugs (1) verlaufend bestimmt wird, falls das Kraftfahrzeug (1) in Vorwärtsrichtung fährt und/oder der Lenkwinkel des Kraftfahrzeugs (1) zumindest über eine vorbestimmte Zeitdauer und/oder eine vorbestimmte Strecke etwa 0 Grad beträgt.

8. Verfahren nach einem der Ansprüche 4 bis 7,
**dadurch gekennzeichnet, dass**
die Kontur (K) als eine, insbesondere spitz zulaufend, ellipsenförmige Hüllkurve (H) bestimmt wird, deren Hauptachse (11) sich entlang der Längsachse (L2) des Anhängers (A), insbesondere ausgehend von einem heckseitigen Stützpunkt (S) am Kraftfahrzeug (1), erstreckend bestimmt wird.

9. Verfahren nach einem der Ansprüche 4 bis 7,
**dadurch gekennzeichnet, dass**
die Kontur (K) als eine fünfeckförmige Hüllkurve (H) bestimmt wird, wobei zwei Seitenkanten (12, 13) der fünfeckigen Hüllkurve (H) parallel zur Längsachse (L2) des Anhängers (A) erstreckend bestimmt werden und zwei weitere Seitenkanten (15, 16) ausgehend von den parallel verlaufenden Seitenkanten (12, 13) spitz in Richtung eines heckseitigen Stützpunktes (S) am Kraftfahrzeug (1) zulaufend bestimmt werden.

10. Verfahren nach einem der Ansprüche 4 bis 7,
**dadurch gekennzeichnet, dass**
die Kontur (K) als eine polygonzugförmige Hüllkurve (H) bestimmt wird und eine Breite (14) des Bereiches (10) begrenzende Seitenränder der Kontur (K) als sich parallel zu der Längsachse (L2) des Anhängers (A) erstreckende, seitliche Hüllkurvenabschnitte (19, 20) bestimmt werden und eine, einem Heck (7) des Kraftfahrzeugs (1) zugewandte Vorderseite der Kontur (K) des Anhängers (A) als ein vorderseitiger, die erfassten anhängerspezifischen Positionsdatenpunkte (P2, P3, P4, P5, P6) umfassender Hüllkurvenabschnitt (18) bestimmt wird.

11. Verfahren nach einem Anspruch 10,
**dadurch gekennzeichnet, dass**
aus den anhängerspezifischen Positionsdatenpunkten (P2, P3, P4, P5, P6) die seitlich äußeren Positionsdatenpunkte (P2, P6) bestimmt werden und die seitlichen Hüllkurvenabschnitte (19, 20) durch die seitlich äußeren Positionsdatenpunkte (P2, P6) verlaufend bestimmt werden.

12. Verfahren nach Anspruch 10 oder 11,
**dadurch gekennzeichnet, dass**
die dem Heck (7) des Kraftfahrzeugs (1) zugewandte Vorderseite der Kontur (K) des Anhängers (A) als der die erfassten anhängerspezifischen Positionsdatenpunkte (P2, P3, P4, P5, P6) und zusätzlich einen heckseitigen Stützpunkt (S) am Kraftfahrzeug (1) umfassende Hüllkurvenabschnitt (18) bestimmt wird.

13. Verfahren nach einem der vorhergehenden Ansprüche,
**dadurch gekennzeichnet, dass**
ein Toleranzbereich vorgegeben wird und angrenzend an die Hüllkurve (H) bestimmt wird, wobei der von dem Anhänger (A) eingenommene Bereich (10) als die von der Hüllkurve (10) eingeschlossene Fläche (F) und der Toleranzbereich bestimmt wird.

14. Fahrerassistenzsystem (2) für ein Kraftfahrzeug (1) zum Bestimmen eines durch einen Anhänger (A) des Kraftfahrzeugs (1) belegten Bereiches (10) in einem Umgebungsbereich (U) des Kraftfahrzeugs (1) für eine Umfeldkarte (U) des Fahrerassistenzsystems (2), mit einer fahrzeugseitigen Steuereinrichtung (3), welche dazu ausgelegt ist, von einer fahrzeugseitigen Erfassungseinrichtung (4) erfasste Positionsdatenpunkte (P1, P2, P3, P4, P5, P6), welche den Umgebungsbereich (U) des Kraftfahrzeugs (1) beschreiben, zu empfangen, anhängerspezifische Positionsdatenpunkten (P2, P3, P4, P5, P6), welche dem Anhänger (A) zugeordnet sind, aus den erfassten Positionsdatenpunkten (P1, P2, P3, P4, P5, P6) auszuwählen, eine Kontur (K) des Anhängers (A) aus den anhängerspezifischen Positionsdatenpunkten (P2, P3, P4, P5, P6) als eine, eine Fläche (F) einschließende Hüllkurve (H) derart zu bestimmen, dass die anhängerspezifischen Positionsdatenpunkte (P2, P3, P4, P5, P6) auf der Hüllkurve (H) und/oder innerhalb der durch die Hüllkurve (H) eingeschlossenen Fläche (F) liegen, und die durch die Hüllkurve (H) eingeschlossene Fläche (F) als den von dem Anhänger (A) belegten Bereich (10) zu bestimmen.

15. Kraftfahrzeug (1) mit einem Fahrerassistenzsystem (2) nach Anspruch 14.
